(19) **Europäisches Patentamt / European Patent Office / Office européen des brevets**

(11) **EP 1 456 045 B1**

(12) **FASCICULE DE BREVET EUROPEEN**

(45) Date de publication et mention
de la délivrance du brevet:
**09.05.2007 Bulletin 2007/19**

(21) Numéro de dépôt: **02799776.6**

(22) Date de dépôt: **04.12.2002**

(51) Int Cl.:
**B60H 1/32** *(2006.01)*

(86) Numéro de dépôt international:
**PCT/FR2002/004184**

(87) Numéro de publication internationale:
**WO 2003/053727 (03.07.2003 Gazette 2003/27)**

(54) **INSTALLATION DE CLIMATISATION DE VEHICULE MUNIE D'UN DISPOSITIF ELECTRONIQUE DE CONTROLE**

MIT EINER ELEKTRONISCHEN STEUERVORRICHTUNG AUSGESTATTETE KRAFTFAHRZEUG-KLIMAANLAGE

MOTOR VEHICLE AIR-CONDITIONING INSTALLATION EQUIPPED WITH AN ELECTRONIC CONTROL DEVICE

(84) Etats contractants désignés:
**AT BE BG CH CY CZ DE DK EE ES FI FR GB GR IE IT LI LU MC NL PT SE SI SK TR**

(30) Priorité: **20.12.2001 FR 0116568**

(43) Date de publication de la demande:
**15.09.2004 Bulletin 2004/38**

(73) Titulaire: **VALEO SYSTEMES THERMIQUES**
**78321 Le Mesnil St Denis Cedex (FR)**

(72) Inventeur: **BEN YAHIA, Mohamed**
**F-75005 Paris (FR)**

(74) Mandataire: **Léveillé, Christophe**
**VALEO SYSTEM THERMIQUE**
**Branche Thermique Habitacle**
**Service Propriété Industrielle**
**8 rue Louis Lormand**
**BP 513**
**78321 Le Mesnil Saint Denis Cedex (FR)**

(56) Documents cités:
**DE-A- 10 053 438      US-A- 5 893 272**
**US-A- 6 119 473**

**Description**

L'invention concerne les circuits de climatisation des véhicules à moteur.

Dans les véhicules à moteur classiques, le compresseur du circuit de climatisation est entraîné par le moteur et consomme donc une partie de la puissance du moteur. Bien que la puissance absorbée par le compresseur, quand il est en marche, ne soit pas importante, elle influe tout de même sur le rendement du moteur. En diminuant le rendement du moteur, la puissance absorbée réellement par le compresseur augmente la consommation de carburant et la pollution générée par les gaz d'échappement du véhicule.

Pour optimiser le rendement du moteur, une solution consiste à estimer la puissance instantanée réellement absorbée par le compresseur. La connaissance de cette information permet, en effet, d'adapter les paramètres d'injection du moteur aux besoins réels. En l'absence de cette information, le calculateur d'injection choisit, par défaut, des paramètres d'injection correspondant à la valeur maximale de la puissance absorbée, valeur qui est rarement atteinte en pratique.

Cet inconvénient peut concerner les compresseurs mécaniques à contrôle interne qui fonctionnent par l'intermédiaire de l'embrayage interposé entre le moteur et le compresseur. En mode régulé, les compresseurs à contrôle interne adaptent leur cylindrée suivant une loi linéaire reliant la valeur de la pression en entrée du compresseur, dite basse pression à la valeur de sortie du compresseur, dite haute pression. Pourtant, il arrive que la puissance réellement absorbée par le compresseur soit inférieure à sa puissance nominale.

De tels compresseurs absorbent une puissance qui dépend des conditions de fonctionnement et qui ne peut donc être réduite, même si on connaît la puissance réellement absorbée par le compresseur. En revanche, il est possible de réguler le fonctionnement de la climatisation en débrayant le compresseur lorsque la puissance n'est pas acceptable.

Cet inconvénient est encore plus gênant pour les compresseurs à contrôle externe, dont l'utilisation se généralise.

En effet, dans les compresseurs mécaniques à contrôle externe, la puissance réellement absorbée par le compresseur est souvent inférieure à sa puissance nominale. Par suite, l'injection doit compenser l'écart entre la puissance mécanique nominale et la puissance mécanique réellement absorbée, ce qui diminue le rendement du moteur.

Dans des réalisations connues, on utilise une cartographie qui fournit une estimation de la puissance instantanée absorbée par le compresseur en fonction de la valeur instantanée de la haute pression mesurée par un premier capteur est d'une information relative au fonctionnement du véhicule mesurée par un deuxième capteur. Ce dispositif est un dispositif empirique qui se base sur une cartographie établie à partir de tests, implantée dans le calculateur de climatisation.

Cette méthode présente l'inconvénient de ne pas prendre en compte tous les cas possibles et reste donc approximative.

Dans le cas des compresseurs électriques, on dispose facilement de la valeur instantanée de la puissance absorbée par le compresseur car la cylindrée de ces compresseurs - et donc le débit massique du fluide frigorigène absorbé - est connue. Cependant, pour ce type de compresseurs, le problème se pose d'anticiper le dépassement de la puissance électrique maximale absorbée par le compresseur lorsque la vitesse de rotation du compresseur augmente. En effet, si les réalisations existantes permettent de connaître la valeur instantanée de la puissance électrique consommée, elles ne permettent pas de prévoir la valeur que prendra cette puissance en fonction de l'évolution de la vitesse de rotation. Cette incapacité de prévoir le seuil de dépassement de cette vitesse critique du compresseur n'autorise que des solutions a posteriori. Une de ces solutions consiste à déclencher la sécurité interne du moteur pour limiter la puissance absorbée par le compresseur et donc la vitesse.

La plupart des réalisations existantes utilisent des méthodes empiriques pour ajuster la puissance absorbée par le compresseur. On avait toutefois estimé qu'il existait une relation simple entre la haute pression et la puissance absorbée par le compresseur. Cependant, un dispositif reposant sur une telle relation n'a pas été réalisé.

DE-A-10053438 montre une installation de climatisation telle que décrite dans le préambule de la première revendication.

C'est un but de la présente invention de proposer un dispositif permettant de fournir, une estimation de la puissance absorbée, à partir d'une relation simple entre le débit massique du fluide frigorigène à la haute pression.

C'est encore un but de la présente invention de fournir un tel dispositif capable d'obtenir une estimation de précision correcte.

L'invention propose à cet effet une installation de climatisation pour véhicule à moteur muni d'un calculateur d'injection. L'installation comprend un circuit fermé de fluide frigorigène comprenant un compresseur, un condenseur électrique ou mécanique, un détendeur et un évaporateur, le condenseur recevant un flux d'air passant par un groupe moto-ventilateur, ainsi qu'un dispositif électronique de contrôle destiné à interagir avec le circuit fermé de fluide frigorigène et le calculateur d'injection.

Avantageusement, l'installation comprend des organes de mesures permettant d'établir :

- une première valeur relative à la température du flux d'air extérieur à l'entrée du condenseur,
- une deuxième valeur relative à la pression en sortie du compresseur, dite haute pression,
- une troisième valeur relative à la pression en entrée du compresseur, dite basse pression,

le dispositif électronique de contrôle met en oeuvre la résolution d'une équation linéaire, liant le débit massique du fluide frigorigène aux valeurs mesurées par le premier et le deuxième organe de mesure pour calculer une estimation du débit massique si le compresseur est mécanique ou de la haute pression si le compresseur est électrique et pour estimer, à partir de ce débit massique ou de cette haute pression, des mesure fournies par les dits organe de mesure et des informations transmises par le calculateur d'injection, la puissance absorbée par le compresseur.

Selon la première forme de réalisation, le dispositif électronique de contrôle est apte. à calculer une estimation du débit massique du fluide frigorigène à partir des valeurs mesurées par le premier et le deuxième organe de mesure, et de deux informations relatives au fonctionnement du véhicule, transmises par le calculateur d'injection.

Avantageusement, le dispositif électronique de contrôle est également apte à calculer la puissance absorbée par le compresseur à partir de l'estimation du débit massique calculée, des valeurs mesurées par le deuxième et le troisième organe de mesure, et d'informations relatives au fonctionnement du véhicule, fournies par le calculateur d'injection.

Dans la deuxième forme de réalisation selon l'invention, le dispositif électronique de contrôle est apte à calculer une estimation de la haute pression du fluide frigorigène à partir de la valeur mesurée par le premier organe de mesure, de la valeur du débit massique du fluide frigorigène et de deux informations relatives au fonctionnement du véhicule, transmises par le calculateur d'injection.

Avantageusement, le dispositif électronique de contrôle est apte à calculer la puissance absorbée par le compresseur à partir de l'estimation de la haute pression calculée, de la valeur mesurée par le troisième organe de mesure, et d'informations relatives au fonctionnement du véhiculé, fournies par le calculateur d'injection.

En complément, selon cette deuxième forme de réalisation, le dispositif électronique de contrôle est capable, pour un état de départ donné, de calculer itérativement des valeurs de la puissance absorbée par le compresseur, à partir de valeurs de la haute pression correspondant à de petites variations choisies de la vitesse de rotation pour estimer la vitesse de rotation maximale.

L'invention couvre également un programme-produit, qui peut être défini comme comprenant les fonctions pour résoudre ladite équation afin d'estimer la puissance absorbée par le climatiseur.

D'autres caractéristiques et avantages de l'invention apparaîtront à l'examen de la description détaillée ci-après, et des dessins annexés sur lesquels:

- la figure 1 représente une vue d'ensemble d'un dispositif de climatisation installé à bord d'un véhicule,

- la figure 2 est un schéma d'une installation de véhicule automobile à moteur, muni du dispositif de contrôle selon une première forme de réalisation de l'invention, .

- la figure 3 est une vue analogue à la figure 2 dans une variante de réalisation,

- la figure 4 illustre la précision de l'estimation du débit massique selon l'invention,

- la figure 5 illustre la relation entre la vitesse de l'air et la vitesse du véhicule,

- la figure 6 est un diagramme illustrant la précision de l'estimation de la puissance absorbée par la climatisation, selon l'invention,

- la figure 7 représente un schéma-bloc de compresseur électrique, et

- la figure 8 est un exemple d'organigramme d'anticipation de commande de vitesse de rotation.

L'annexe A comporte les équations mathématiques principales utilisées dans l'installation.

Les dessins contiennent, pour l'essentiel, des éléments de caractère certain. Ils pourront donc non seulement servir à mieux faire comprendre la description, mais aussi contribuer à la définition de l'invention, le cas échéant.

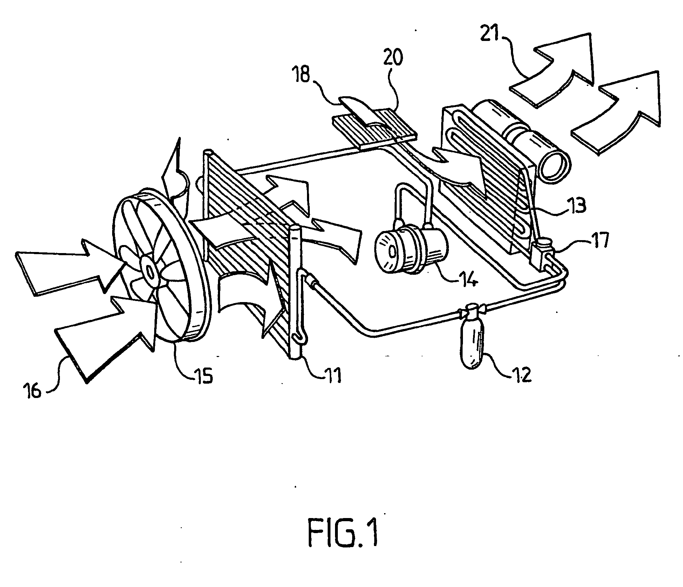

On se réfère tout d'abord à la figure 1 qui représente une vue d'ensemble d'un appareil de climatisation intégré à un véhicule. L'appareil de climatisation comprend un circuit fermé de fluide frigorigène qui peut être tout fluide sous-critique, c'est-à-dire tout fluide ayant une température critique supérieure à la température de la source chaude. L'appareil de climatisation comprend également un compresseur 14, un condenseur 11, un réservoir déshydratant 18, un détendeur 12 et un évaporateur 13, parcourus dans cet ordre par le réfrigérant. La description suivante sera faite principalement en référence au fluide frigorigène R134a à titre d'exemple non limitatif.

Le condenseur 11 reçoit un flux d'air extérieur 16 pour évacuer la chaleur prélevée dans l'habitacle, qui dans certaines conditions de fonctionnement est mis en mouvement par un groupe moto-ventilateur 15.

L'évaporateur 13 reçoit un flux d'air d'un pulseur 20 alimenté par un flux d'air extérieur 18 et produit un flux d'air climatisé 21 qui est envoyé vers l'habitacle du véhicule.

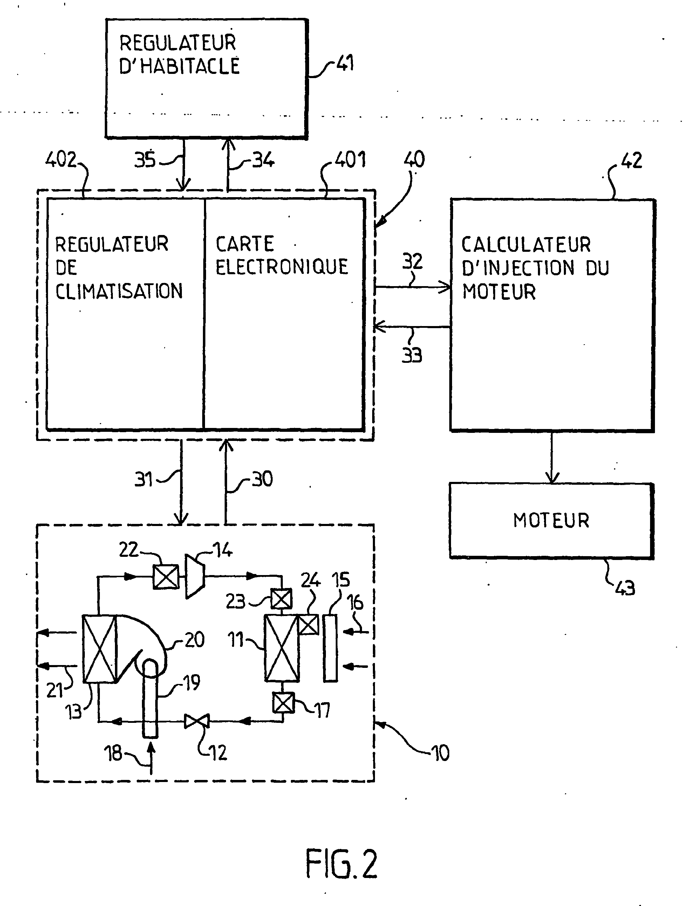

La figure 2 représente l'installation, selon la présente invention, mise en place dans un véhicule automobile, éventuellement en mouvement selon une vitesse d'avancement Va. Le véhicule automobile est animé par un moteur 43, commandé par un calculateur d'injection 42. Le calculateur reçoit des informations de divers capteurs qu'il interprète pour ajuster les paramètres. Il peut donc fournir des informations 33 sur des valeurs instantanées relatives au fonctionnement du véhicule, et notamment la vitesse d'avancement du véhicule, la température de l'air extérieur pénétrant dans l'appareil de climatisation, la vitesse de rotation du compresseur et la tension du groupe moto-ventilateur.

Le véhicule est également équipé de l'appareil de climatisation 10 décrit ci-dessus, représentée schématiquement sur la figure 2. De plus, l'installation comprend un régulateur d'habitacle 41 destiné à fixer la consigne de température de l'air extérieur 18 soufflé à l'entrée de l'évaporateur 11.

Le calculateur d'injection du moteur peut agir sur l'appareil de climatisation grâce à un régulateur de climatisation 402. Cette liaison permet uniquement de commander la mise en marche ou l'arrêt de l'appareil de climatisation selon les conditions liées au fonctionnement du moteur ou aux commandes externes. Par exemple, elle permet d'interdire la mise en marche de l'appareil de la climatisation lorsque le moteur est fortement sollicité.

Cette liaison 402 se limite à ce fonctionnement en "tout ou rien". En l'absence d'un dispositif pour estimer instantanément la puissance absorbée par un compresseur mécanique, ou pour estimer par anticipation la puissance absorbée par un compresseur électrique, le régulateur de climatisation 402 ne peut ajuster le fonctionnement de la boucle de climatisation.

La Demanderesse a mis en place un tel dispositif permettant d'améliorer ce fonctionnement, par l'utilisation d'une relation simple, obtenue à partir des lois de la thermodynamique entre le débit massique du fluide frigorigène et la haute pression.

Pour cela, le régulateur de l'habitacle 41, le calculateur d'injection du moteur 42 et l'appareil de climatisation 10 sont reliés à une carte électronique 401 pour un échange bidirectionnel d'informations.

La carte électronique met en oeuvre la résolution des équations qui permettent d'obtenir une estimation de la puissance absorbée par le compresseur. Elle peut transmettre des informations qui résultent de cette estimation au calculateur d'injection, par la liaison 32

La carte électronique 401 peut-être considérée comme partie intégrante du régulateur de climatisation 402. Le régulateur de climatisation 402 a notamment le rôle d'adapter la quantité de chaleur prélevée dans l'habitacle, dite puissance frigorifique, pour atteindre la consigne d'air soufflé à l'entrée de l'évaporateur. Cette consigne est préalablement indiquée au régulateur de climatisation 402 par le régulateur d'habitacle (liaison 35).

La carte électronique 401 récupère des informations 30 provenant des capteurs mis en place sur l'appareil de climatisation. Elle reçoit également des informations du calculateur d'injection du moteur 42 par la liaison 33, en particulier la vitesse d'avancement du véhicule, la tension du groupe moto-ventilateur, la vitesse de rotation de compresseur ou la température de l'air extérieur.

Le régulateur d'habitacle 41 échange des informations avec le régulateur de climatisation relatives à la consigne d'air soufflé à l'entrée de l'évaporateur, au moyen des liaisons 34 et 35.

Les liaisons 30, 33 et 35 de la carte électronique 401 avec l'appareil de climatisation 10, le calculateur d'injection du moteur 42 et le régulateur de l'habitacle 41 ont pour but de déterminer les valeurs instantanées de la température de condensation $T_k$, de la température de l'air extérieure à l'entrée du condensateur $T_{aek}$, de la pression en entrée du compresseur, dite basse pression BP, de la pression en sortie du compresseur dite haute pression HP, de la vitesse d'avancement du véhicule Va, de la tension du groupe moto-ventilateur GMV et de la vitesse de rotation du compresseur N.

Les valeurs instantanées de HP et $T_k$ étant liées par la loi de saturation des fluides, il suffit de déterminer l'une de ces deux valeurs, l'autre pouvant être déduite par la carte électronique au moyen de la relation conforme à la loi de saturation des fluides. Par ailleurs, les valeurs de la vitesse d'avancement du véhicule Va, de la tension du groupe moto-ventilateur GMV et de la vitesse de rotation du compresseur N sont des données accessibles par le calculateur d'injection du moteur.

Elles sont donc directement transmises par ce dernier à la carte électronique via la liaison 33. Plusieurs possibilités existent ensuite pour fournir à la carte électronique les autres paramètres. Notamment, la mise en place de capteurs sur l'appareil de climatisation 10 et éventuellement l'utilisation d'informations supplémentaires en provenance du calculateur d'injection 41 contribuent à obtenir ces paramètres.

La relation simple obtenue par la Demanderesse lie plus précisément le débit massique, la haute pression et d'autres paramètres relatifs au fonctionnement de l'appareil de climatisation et au fonctionnement du véhicule.

Dans une première forme de réalisation, décrite ci-après, on utilise un compresseur mécanique. Le dispositif selon cette première forme de réalisation de l'invention a pour objet d'estimer le débit massique m du fluide frigorigène traversant le circuit de climatisation et d'estimer à partir de cette valeur la puissance mécanique Pa absorbée par la boucle de climatisation.

La relation de l'annexe A1 indique que la connaissance de la température de condensation $T_k$, de la température de l'air extérieur à l'entrée du condenseur $T_{aek}$ et de la constante A permettent d'estimer le débit massique m du fluide frigorigène.

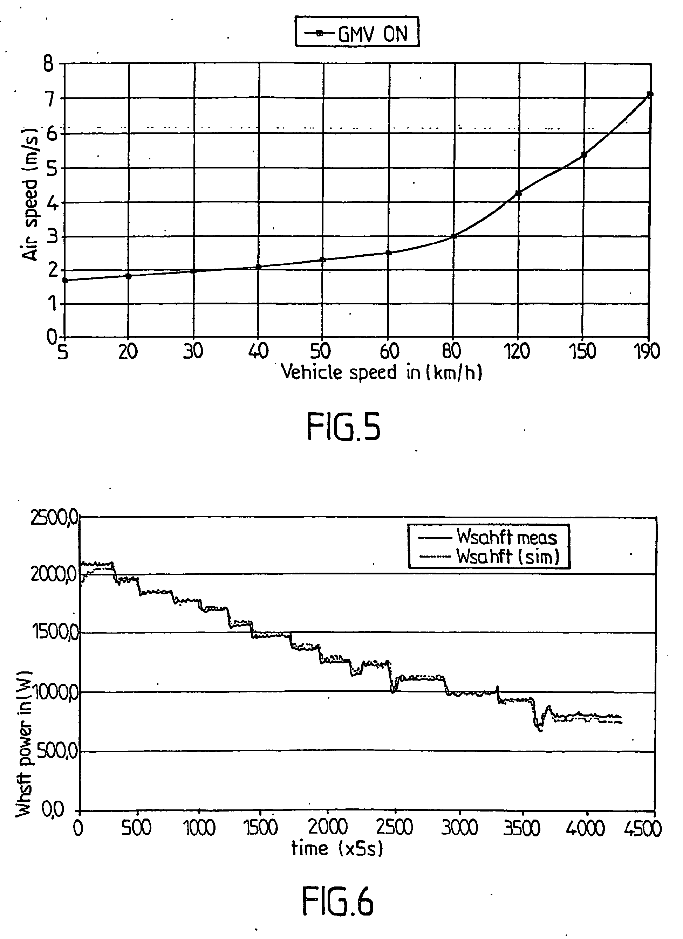

La liaison 33 depuis le calculateur d'injection du moteur fournit les valeurs instantanées de la vitesse d'avancement du véhicule Va et de la tension du groupe moto-ventilateur GMV. Ces valeurs permettent le calcul du débit massique de l'air $C_{pa}$ et par suite de la constante A, compté tenu de la relation de l'annexe A1 qui lie A à $C_{pa}$ (annexe A1). La figure 5 montre en effet que le débit massique de l'air est lié à la vitesse d'avancement du véhicule Va et à la tension du groupe moto-ventilateur GMV.

Dans un mode de réalisation particulier, le dispositif comprend deux capteurs pour mesurer la température de condensation $T_k$, et la température de l'air extérieur à l'entrée du condenseur $T_{aek}$.

Sur la figure 2, la température de condensation $T_k$ est mesurée par le capteur 23 qui est une sonde placée à l'entrée du condenseur directement au sein du fluide frigorigène. Cet emplacement est choisi tel que le fluide frigorigène soit dans un état de mélange liquide/vapeur, par exemple à la fin de la première passe du condenseur si ce dernier contient 4 passes.

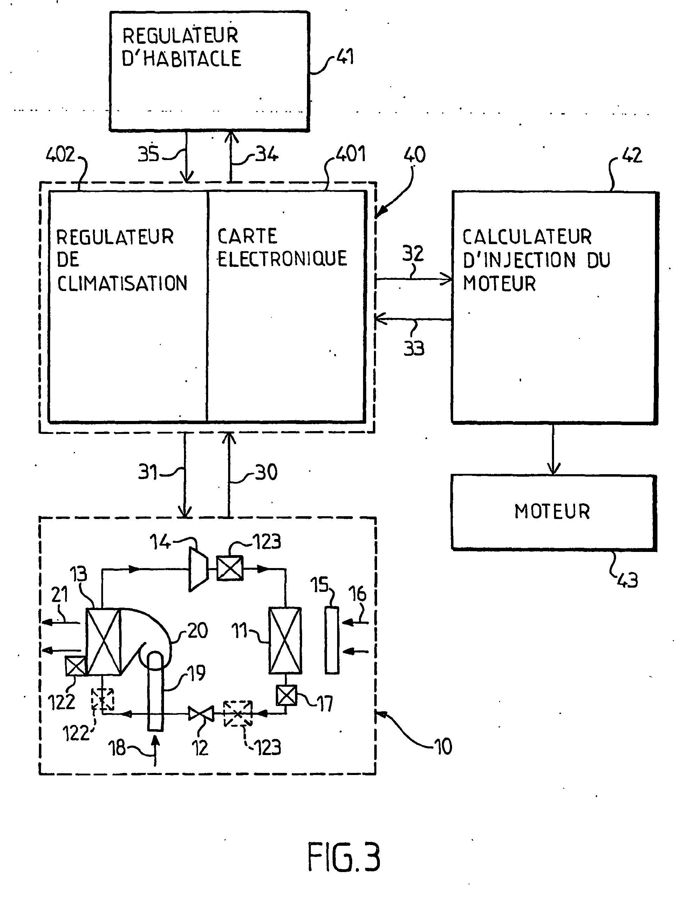

En variante, la température condensation $T_k$ peut-être mesurée indirectement. Pour cela, on utilise le capteur 123 de la figure 3 qui mesure la valeur de la haute pression HP en sortie du compresseur. La carte électronique 401 calculera alors la valeur de la température de condensation $T_k$ en utilisant la loi de saturation des fluides. Dans les modes de réalisation de la figure 3, le capteur 123 qui mesure la valeur instantanée de la haute pression HP peut-être placé à tout endroit approprié entre la sortie du compresseur et l'entrée du condenseur, ou de préférence entre la sortie du condenseur et l'entrée du détendeur.

En référence à la figure 2, la température $T_{aek}$ de l'air extérieur à l'entrée du condenseur 11 est mesurée par le capteur 25 qui est une sonde de température placée entre le groupe moto-ventilateur 15 et le condenseur 11.

Dans un autre mode de réalisation, seul un capteur est utilisé dans le circuit de climatisation pour l'estimation de la valeur instantanée du débit massique du fluide frigorigène. Ce capteur est le capteur 23 (ou 123), qui mesure la valeur instantanée de la température de condensation $T_k$.

En référence à la figure 3, la valeur instantanée de la température $T_{aek}$ de l'air extérieur à l'entrée du condenseur (11) est alors calculée par la carte électronique, à partir des valeurs instantanées de la vitesse d'avancement Va du véhicule et de la température de l'air extérieur $T_{ext}$ en entrée du groupe moto-ventilateur fournies par le calculateur d'injection du moteur 42 et par le régulateur d'habitacle 41.

Dans tous ces modes de réalisation, les valeurs instantanées de la température de condensation $T_k$, et de la température de l'air extérieur à l'entrée du condenseur $T_{aek}$, mesurées ou calculées sont associées à la constante A, selon la relation de l'annexe A1, par la carte électronique pour calculer une estimation du débit massique de fluide frigorigène dans le circuit de climatisation.

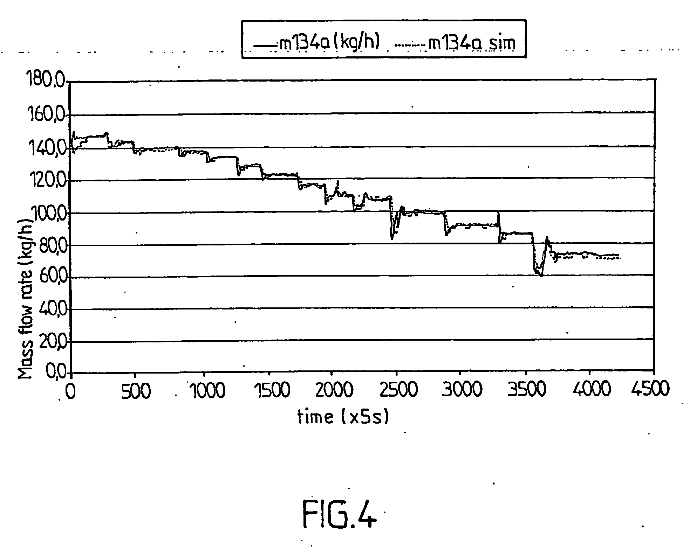

La figure 4 illustre la précision de l'estimation du débit massique du fluide frigorigène circulant dans le circuit de climatisation. Le graphique de la figure 4 représente l'écart entre une première courbe correspondant aux variations du débit massique estimé du fluide frigorigène R134a (*m134a sim*) en fonction du temps et une seconde courbe correspondant aux variations du débit massique réel du fluide frigorigène R134a (*m134a kg/h*) en fonction du temps.

Le graphique indique un écart peu important entre les deux courbes et par conséquent une précision satisfaisante. Cet écart est satisfaisant pour l'estimation de la puissance absorbée par le compresseur.

Avantageusement, la Demanderesse a trouvé que cette estimation du débit massique de fluide frigorigène qui offre une précision intéressante dans les conditions énoncées précédemment permettait de calculer la puissance mécanique absorbée par le compresseur.

En référence aux figures 2 et 3, le dispositif décrit précédemment est agencé pour obtenir les informations qui permettent, selon les relations des annexes A2 et A3, de calculer la puissance mécanique absorbée. Outre l'estimation du débit massique, ces informations concernent l'estimation du travail de compression isentropique Wis et la vitesse de rotation du compresseur N. Les constantes B, C et D et E sont liées à des paramètres de fonctionnement du circuit de climatisation et donc fixées en tant que paramètres de calcul.

La carte électronique 401 estime le rapport de compression Pr à partir des valeurs de la haute pression HP et de la basse pression BP, afin de calculer le travail de compression isentropique Wis. La haute pression HP a été mesurée par le dispositif d'estimation du débit massique, directement ou indirectement (par le calcul de la température de condensation). Par ailleurs, la vitesse de rotation du compresseur N est fournie à la carte électronique par le calculateur d'injection du moteur 42, par la liaison 33 en référence aux figures 2 et 3. Il reste à mesurer la valeur de la basse pression BP.

Dans une variante de réalisation en référence à la figure 2, la valeur instantanée de la basse pression BP est mesurée directement par un capteur 22 qui peut-être placé à tout endroit voulu entre l'évaporateur et le compresseur. Cette mesure est transmise à la carte électronique 401, par la liaison 30.

La valeur instantanée de la basse pression BP peut également être mesurée indirectement. Dans ce cas, le capteur est une sonde, désignée par la référence 122 de la figure 3, qui mesure la température d'évaporation. La température d'évaporation est, en effet, liée à la basse pression BP par la loi de saturation des fluides. Cette sonde peut-être une sonde à thermistance, de structure classique, placée dans les ailettes de l'évaporateur.

En variante, la basse pression pourrait être estimée indirectement à partir de la température d'air en sortie de l'évaporateur (13), de la haute pression HP, de la température d'air extérieur $T_{ext}$ et de la tension du pulseur. Le régulateur d'habitacle 41 peut fournir la température consigne de l'habitacle ainsi que la tension du pulseur pour calculer une estimation du débit d'air au niveau de l'évaporateur. Mais cette variante a l'inconvénient d'être peu précise.

La sonde en outre être placée au sein même du réfrigérant, dans un conduit ou dans le détendeur 12 par exemple.

Dans ce mode de réalisation, la valeur mesurée de la température d'évaporation est transmise à la carte électronique (liaison 30) qui applique la loi de saturation des fluides pour en déduire la valeur de la basse pression BP.

La figure 6 illustre la précision de la mesure de la puissance mécanique selon cette forme de réalisation, lors de tests réalisés pour un débit massique de l'air de 2000 kg/h et d'une température de l'air extérieur $T_{aek}$ de 35°C. Le graphique montre que l'écart entre la courbe représentant la puissance mécanique absorbée par le compresseur estimée *(Wshaft meas)* et la puissance mécanique absorbée par le compresseur réelle *(Wshaft sim)* est peu important, ce qui indique d'une précision de la mesure satisfaisante. Néanmoins, cette précision dépend de la qualité et de l'estimation de $T_k$ et de $T_{aek}$.

Le calculateur adresse alors au module d'injection du moteur la valeur estimée de la puissance mécanique absorbée par le compresseur. Le calculateur adapte alors la puissance mécanique nominale absorbée par le compresseur si celle-ci dépasse une valeur maximale définie par le calculateur à partir de cette valeur estimée. Par suite la consommation de carburant est réduite et les augmentations excessives de la puissance absorbée par le compresseur sont mieux contrôlées.

Dans le cas des compresseurs mécaniques à contrôle interne, on utilise également le dispositif selon la présente invention pour estimer la puissance mécanique absorbée par le compresseur. Toutefois, pour ce type de compresseur, cette puissance estimée est utilisée pour débrayer le compresseur afin de réduire le débit massique de fluide frigorigène absorbé par le compresseur.

Dans une deuxième forme de réalisation, le compresseur est un compresseur électrique. Le dispositif selon cette deuxième a pour objet d'estimer la haute pression et à partir de cette valeur d'estimer la valeur de la puissance électrique absorbée par le compresseur.

C'est encore un but de cette deuxième forme de réalisation de réaliser une anticipation de commande dé vitesse de rotation.

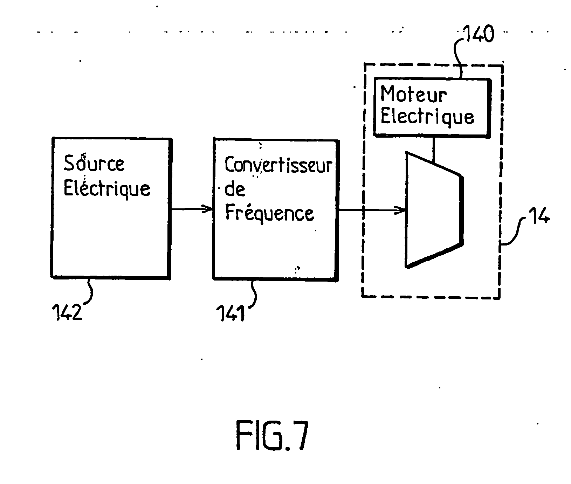

La figure 7 représente un schéma de compresseur électrique. Le compresseur électrique 14 est actionné par un moteur électrique 140 intégré par des moyens de commande appropriés et est alimenté par une source électrique 142 de type batterie. Cette source transmet de l'énergie au compresseur via un convertisseur de fréquence 141.

Dans les compresseurs électriques, la cylindrée est fixe, ce qui permet de connaître simplement la puissance électrique instantanée absorbée par le compresseur, conformément à l'équation de l'annexe A4.

Les compresseurs électriques comprennent des limitateurs de puissance absorbée, pour couper la climatisation dans le cas où la valeur instantanée de la puissance absorbée est supérieure à la puissance nominale. Mais ces limitateurs interviennent après que la puissance nominale soit atteinte, et n'anticipe donc pas le dépassement.

Il est connu que le débit massique du fluide varie en fonction de la vitesse de rotation. Or, les relations existantes ne permettent de déduire la puissance électrique absorbée par le compresseur qu'en fonction des variations de la haute pression.

Une solution, selon l'invention, consiste à calculer la valeur de la haute pression à partir de la variation du débit massique pour estimer la valeur de la puissance électrique absorbée, dans le cadre d'une anticipation.

Avantageusement, la Demanderesse a utilisé la relation de l'annexe A1 qui lie le débit massique du fluide frigorigène aux des paramètres liés au fonctionnement de l'appareil de climatisation et au fonctionnement du véhicule, pour estimer cette valeur de la haute pression HP.

Les figures 1 à 3 s'appliquent également à cette forme de réalisation.

La carte électronique reçoit des informations du calculateur 42 et de l'appareil de climatisation 10 pour résoudre l'équation de l'annexe A1. Le calculateur transmet à la carte électronique la valeur du débit massique du fluide, la vitesse d'avancement du véhicule et la tension du groupe moto-ventilateur. L'appareil de climatisation transmet à la carte électronique, la valeur de la température de l'air à l'entrée du condenseur $T_{aek,}$ mesurée comme décrit précédemment (figures 2 et 3).

La carte. électronique peut alors calculer une estimation de la valeur de la température de condensation $T_k$ selon l'annexe A1. La température de condensation $T_k$ étant liée à la haute pression HP par la loi de saturation des fluides, la carte électronique en déduit, par un simple calcul, la valeur de la haute pression HP.

Le dispositif est alors capable d'estimer la puissance électrique absorbée par le compresseur, dans le cadre d'une anticipation de commande de vitesse. En référence à l'annexe A4, la puissance est liée au rapport de compression, donc à la haute pression HP et à la basse pression BP, ainsi qu'à la vitesse de rotation N du compresseur 14.

Le capteur 22 de la figure 2 (ou le capteur 122 de la figure 3) mesure la valeur instantanée de la basse pression et la transmet à la carte électronique (par la liaison 30). Le calculateur transmet à la carte électronique la valeur de la vitesse de rotation N.

La carte électronique peut alors associer ces valeurs à la valeur de la haute pression HP pour en déduire la valeur de la puissance électrique absorbée par le compresseur.

Dans cette forme de réalisation, la puissance mécanique absorbée par un compresseur électrique est estimée pour anticiper le dépassement d'une puissance électrique maximale.

L'estimation permet au compresseur de ne jamais atteindre une zone où l'efficacité du compresseur est très mauvaise. Cette anticipation est possible car le dispositif permet de prédire la valeur de la haute pression que l'on obtiendrait en augmentant le débit massique absorbé par le compresseur, ce qui fournit une estimation de la valeur de la vitesse de rotation à ne pas dépasser.

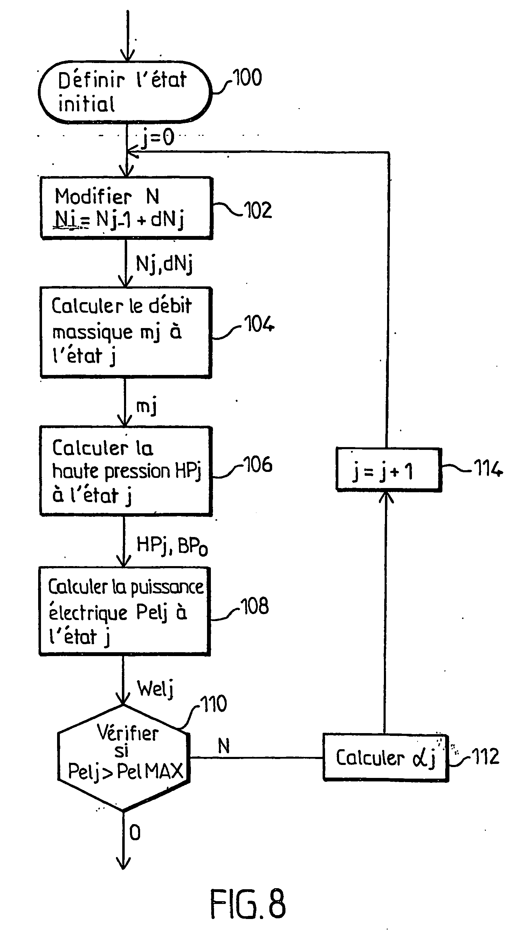

La figure 8 représente un organigramme d'anticipation de commande de vitesse de rotation. Les équations correspondantes sont indiquées, en partie, dans les annexes A4 à A6.

Les capteurs 22 (ou 122) et 23 (ou 123) mesurent des valeurs initiales de la basse pression. BPO et de la haute pression HPO et les transmettent à la carte électronique. Le calculateur d'injection 42 fournit à la carte électronique les valeurs de la vitesse de rotation N0 et du débit massique du fluide m0. Les valeurs HP0, BPO, N0 et m0 sont obtenue lors de l'étape initiale 100. Au cours de cette étape la carte électronique calcule en outre la valeur de la puissance électrique Pel0; à partir de Hp0 et Bp0. La carte électronique fixe également la valeur d'un coefficient, dit facteur de relaxation $\alpha0$, à 1. Les valeurs HP0, BP0, N0, m0, Pel0 et $\alpha0$ constituent l'état initial.

L'organigramme de la figure 8 est itératif et comportent donc différents états repérés par l'indice j.

A l'étape 102 correspondant à un état j, la carte augmente la vitesse de rotation du compresseur d'une quantité fixée par le régulateur de climatisation, modulée par le facteur de relaxation $\alpha_{j-1}$, comme indiqué dans l'annexe A5.

On passe alors à l'étape 104 pour calculer la valeur correspondante du débit massique mj. Elle se déduit simplement de la variation de la vitesse de rotation dNj et de sa valeur Nj calculée à l'étape 102 et de la valeur précédente du débit massique $m_{j-1}$ (annexe A6).

A l'étape 106, la carte électronique peut alors calculer la nouvelle valeur de la haute pression. HPj conformément à la relation de l'annexe A1 et tel que décrit ci-dessus:

Cette méthode d'anticipation néglige les variations de la basse pression (BPj =BPO). A partir de la nouvelle valeur de HPj et de la valeur de BP, la carte électronique calcule, à l'étape 108, la nouvelle valeur de la puissance électrique Pelj, c'est-à-dire, celle qu'on atteindrait si la vitesse de rotation augmentait de dNj.

A l'étape 110, la carte électronique compare $P_{elj}$ à la puissance maximale du compresseur. Si $P_{elj}$ est supérieure à cette puissance, la valeur de la vitesse de rotation maximale à ne pas dépasser est $N_j$ et l'itération est terminée. Dans le cas contraire, la carte électronique reprend les étapes 102 à 110, après avoir réduit $\alpha_{j-1}$ et incrémenté j. $\alpha_j$ se déduit de $\alpha_{j-1}$ et des valeurs de $P_{elj}$ et $P_{elj-1}$, comme indiqué dans l'annexe A5.

L'estimation de cette vitesse de rotation est alors utilisée pour réguler le fonctionnement de la climatisation.

L'anticipation de la commande de vitesse, telle que décrite ci-dessus, utilise à chaque itération une variation de la vitesse de rotation dNj choisie ici à titre d'exemple. L'invention n'est pas limitée à ce pas d'augmentation de la vitesse de rotation.

Par ailleurs, la présente invention vise également le code logiciel qu'elle fait intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique.

Annexe A

A1. Mesure du débit massique d'un fluide frigorigène

$$m = A.(T_k - T_{aek})$$

$$A = Ks.[\ \Delta H_{cdr}.(1 + Ks/(2.m_a.C_{pa}))\ ]^{-1}$$

A2. Estimation du travail de compression fourni par le compresseur

$$W_{is} = B.(\ P_r^{(k-1)/k} - 1)$$

A3. Estimation de la puissance mécanique absorbée par la climatisation

$$P_a = C.m.W_{is} + D.N$$

$$W_{is} = E.(Pr^{(k-1)/k} - 1)$$

A4. Estimation de la puissance électrique absorbée par la climatisation

$$P_{el} = (W_{el})'$$

$$W_{el} = (F.W_{is} + G.N / r)$$

$$r = F_1 - F_2.Pr - F_3(N)$$

A5.Variation de la vitesse de rotation

$$N_j = N_{j-1} + \alpha_j.dN_0$$

$$\alpha_j = \alpha_{j-1}.P_{elj} / P_{elj-1}$$

A6.Estimation du débit massique à partir de la variation de la vitesse de rotation

$$dm_j = m_{j-1}.dN_j / N_j$$

**Revendications**

1. Installation de climatisation pour véhicule à moteur muni d'un calculateur d'injection (42), l'installation comprenant un circuit fermé de fluide frigorigène comprenant un compresseur mécanique ou électrique (14), un condenseur (11), un détendeur (12) et un évaporateur (13), le condenseur (11) recevant un flux d'air passant par un groupe moto-ventilateur (15), ainsi qu'un dispositif électronique de contrôle (401) destiné à interagir avec le circuit fermé du fluide frigorigène (10) et le calculateur d'injection (42), ladite installation comprenant des organes de mesures permettant d'établir:

   - une première valeur relative à la température du flux d'air extérieur à l'entrée du condenseur ($T_{aek}$),
   - une deuxième valeur relative à la pression en sortie du compresseur, dite haute pression (HP),
   - une troisième valeur relative à la pression en entrée du compresseur, dite basse pression (BP),

   **caractérisé en ce que** le dispositif électronique de contrôle (401) met en oeuvre la résolution d'une équation linéaire, liant le débit massique du fluide frigorigène (m) aux valeurs mesurées par le premier et le deuxième organe de mesure pour calculer une estimation du débit massique si le compresseur est mécanique ou de la haute pression (HP) du fluide frigorigène si le compresseur est électrique et pour estimer, à partir de ce débit massique ou de cette haute pression (HP), des mesures fournies par lesdits organes de mesure et des informations transmises par le calculateur d'injection parmi lesquels on trouve la valeur de la vitesse d'avancement (Va) du véhicule et la tension du groupe moto-ventilateur (15), la puissance absorbée par le compresseur (14).

2. Installation de climatisation selon la revendication 1, **caractérisée en ce que** le premier organe de mesure est une sonde (24) placée entre le groupe moto-ventilateur (15) et le condenseur (11), qui fournit une mesure de la valeur de la température du flux d'air extérieur à l'entrée du condenseur ($T_{aek}$).

3. Installation de climatisation selon la revendication 2, **caractérisée en ce que** le premier organe de mesure est une sonde liée au calculateur d'injection (42) qui fournit une mesure de la valeur de la température du flux d'air extérieur ($T_{ext}$).

4. Installation de climatisation selon la revendication 3, **caractérisée en ce que** le dispositif électronique de contrôle (401) est apte à calculer une estimation de la valeur de la température du flux d'air extérieur à l'entrée du condenseur ($T_{aek}$), à partir de la valeur de la température de l'air extérieur ($T_{ext}$) et de la valeur de la vitesse d'avancement (Va) du véhicule fournies par le calculateur d'injection (42).

5. Installation de climatisation selon la revendication 1, **caractérisée en ce que** le deuxième organe de mesure est une sonde (23) placée à l'entrée du condenseur (11) directement au sein du fluide frigorigène, qui fournit une mesure de la valeur de la température de condensation ($T_k$),

6. Installation de climatisation selon la revendication 5, **caractérisée en ce que** le dispositif électronique de contrôle (401) est apte à calculer la valeur de la haute pression (HP) à partir de la valeur de la température de condensation ($T_k$) fournie par le deuxième organe de mesure.

7. Installation de climatisation selon la revendication 1, **caractérisée en ce que** le deuxième organe de mesure est un capteur (123) placé entre la sortie du compresseur (14) et l'entrée du condenseur (11), qui mesure directement la valeur instantanée de la haute pression (HP).

**8.** Installation de climatisation selon la revendication 1, **caractérisée en ce que** le deuxième organe de mesure est un capteur (123) placé entre la sortie du condenseur (11) et l'entrée du détendeur (12), destiné à mesurer directement la valeur instantanée de la haute pression (HP).

**9.** Installation de climatisation selon l'une des revendications 7 et 8, **caractérisée en ce que** le dispositif électronique de contrôle (401) est apte à calculer la valeur de la température de condensation ($T_k$), à partir de la valeur instantanée de la haute pression (HP) fournie par le deuxième organe de mesure.

**10.** Installation de climatisation selon la revendication 1, **caractérisée en ce que** le troisième organe de mesure est une sonde (122) placée dans les ailettes de l'évaporateur (13) qui fournit une mesure de la valeur instantanée de la température d'évaporation.

**11.** Installation de climatisation selon la revendication 1, **caractérisée en ce que** le troisième organe de mesure est une sonde (122) placée au sein du réfrigérant qui fournit une mesure de la valeur instantanée de la température d'évaporation.

**12.** Installation de climatisation selon l'une des revendications 10 et 11, **caractérisée en ce que** le dispositif électronique de contrôle est apte à calculer la valeur de la basse pression (BP) à partir de la valeur instantanée de la température d'évaporation fournie par le deuxième organe de mesure.

**13.** Installation de climatisation selon la revendication 1, **caractérisée en ce que** le troisième organe de mesure est un capteur (22) placé entre l'évaporateur (13) et le compresseur (14) qui fournit directement une mesure de la valeur instantanée de la basse pression (BP).

**14.** Installation de climatisation selon la revendication 1 prise en combinaison avec l'une des revendications 2 à 13, **caractérisée en ce que** le dispositif électronique de contrôle (401) est apte à calculer une estimation du débit massique du fluide frigorigène à partir des valeurs mesurées par le premier et le deuxième organe de mesure et de deux informations relatives au fonctionnement du véhicule, transmises par le calculateur d'injection (42).

**15.** Installation de climatisation selon la revendication 14, **caractérisée en ce que** les informations relatives au fonctionnement du véhicule sont liées à la vitesse d'avancement du véhicule et à la tension du groupe moto-ventilateur.

**16.** Installation de climatisation selon la revendication 19, **caractérisée en ce que** le dispositif électronique de contrôle (401) est apte à calculer la puissance absorbée par le compresseur à partir de l'estimation du débit massique calculée, des valeurs mesurées par le deuxième et le troisième organe de mesure, et d'informations relatives au fonctionnement du véhicule, fournies par le calculateur d'injection (42).

**17.** Installation de climatisation selon la revendication 16, **caractérisée en ce que** les informations relatives au fonctionnement du véhicule sont liées à la vitesse de rotation du compresseur.

**18.** Installation de climatisation selon la revendication 1 prise en combinaison avec l'une des revendications 2 à 13, **caractérisée en ce que** le dispositif électronique de contrôle (401) est apte à calculer une estimation de la haute pression (HP) du fluide frigorigène à partir de la valeur mesurée par le premier organe de mesure, de la valeur du débit massique du fluide frigorigène et de deux informations relatives au fonctionnement du véhicule, transmises par le calculateur d'injection (42).

**19.** Installation de climatisation selon la revendication 18, **caractérisée en ce que** les informations relatives au fonctionnement du véhicule sont liées à la vitesse d'avancement du véhicule et à la tension du groupe moto-ventilateur.

**20.** Installation de climatisation selon la revendication 18, **caractérisée en ce que** le dispositif électronique de contrôle (401) est apte à calculer la puissance absorbée par le compresseur à partir de l'estimation de la haute pression (HP) calculée, de la valeur mesurée par le troisième organe de mesure, et d'informations relatives au fonctionnement du véhicule, fournies par le calculateur d'injection (42).

**21.** Installation de climatisation selon la revendication 20, **caractérisée en ce que** les informations relatives au fonctionnement du véhicule sont liées à la vitesse de rotation du compresseur.

**22.** Installation de climatisation selon les revendications 18 à 21, **caractérisée en ce que** le dispositif électronique de contrôle est capable, pour un état de départ donné, de calculer itérativement des valeurs de la puissance absorbée par le compresseur, à partir de valeurs de la haute pression correspondant à de petites variations choisies de la vitesse de rotation pour estimer la vitesse de rotation maximale.

**23.** Installation de climatisation selon la revendication 22, **caractérisée en ce que** les valeurs de la haute pression sont calculées à partir des valeurs successives du débit massique du fluide frigorigène, calculées en fonction des petites variations de la vitesse de rotation.

**24.** Installation de climatisation selon la revendication 23, **caractérisée en ce que** l'état de départ comprend les valeurs de la haute pression (HP) et de la basse pression (BP), mesurées par le deuxième, et le troisième organe de mesures, correspondant à une vitesse de rotation initiale.

**Claims**

**1.** Motor vehicle air conditioning installation equipped with an injection control unit (42), the installation comprising a closed circuit of refrigerant fluid including an electric or mechanical compressor (14), a condenser (11), an expansion valve (12) and an evaporator (13), the condenser (11) receiving an air flow passing through engine blowers (15), along with an electronic control device (401) intended to interact with the closed circuit of refrigerant fluid (10) and the injection control unit (42), said installation comprising measurement devices used to establish:

- a first value relating to the external air flow temperature at the condenser inlet ($T_{aek}$),
- a second value relating to the compressor outlet pressure, referred to as the high pressure (HP),
- a third value relating to the compressor inlet pressure, referred to as the low pressure (LP),

**characterised in that** the electronic control device (401) uses linear equation resolution, linking the refrigerant mass flow rate (m) with the values measured by the first and second measurement device to calculate an estimation of the mass flow rate if the compressor is mechanical or of the high pressure (HP) of the refrigerant fluid if the compressor is electric, in order to estimate, on the basis of said mass flow rate or said high pressure (HP), measurements provided by said measurement devices and data sent by the injection control unit, including the value of the speed (Va) of the vehicle and the voltage of the engine blowers (15), the power consumed by the compressor (14).

**2.** Air conditioning installation according to claim 1, **characterised** that the first measurement devices is a detector (24) placed between the engine blowers (15) and the condenser (11), which supplies a measurement of the value of the external air flow temperature at the condenser inlet ($T_{aek}$).

**3.** Air conditioning installation according to claim 2, **characterised in that** the first measurement device is a detector linked with the injection control unit (42), which supplies a measurement of the value of the external air flow temperature ($T_{ext}$).

**4.** Air conditioning installation according to claim 3, **characterised in that** the electronic control device (401) is suitable for calculating an estimation of the value of the external air flow temperature at the condenser inlet ($T_{aek}$), on the basis of the value of the external air temperature ($T_{ext}$) and the value of the speed ($V_a$) of the vehicle supplied by the injection control unit (42).

**5.** Air conditioning installation according to claim 1, **characterised in that** the second measurement device is a detector (23) placed at the inlet of the condenser (11) directly in the refrigerant fluid, which supplies a measurement of the value of the condensation temperature ($T_k$).

**6.** Air conditioning installation according to claim 5, **characterised in that** the electronic control device (401) is suitable for calculating the value of the high pressure (HP) on the basis of the value of the condensation temperature ($T_k$) supplied by the second measurement device.

**7.** Air conditioning installation according to claim 1, **characterised in that** the second measurement device is a gauge (123) placed between the outlet of the compressor (14) and the inlet of the condenser (11), which measures the instantaneous value of the high pressure (HP) directly.

**8.** Air conditioning installation according to claim 1, **characterised in that** the second measurement device is a gauge (123) placed between the outlet of the condenser (11) and the inlet of the expansion valve (12), intended to measure the instantaneous value of the high pressure (HP) directly.

**9.** Air conditioning installation according to any of claims 7 and 8, **characterised in that** the electronic control device (401) is suitable for calculating the value of the condensation temperature ($T_k$), on the basis of the instantaneous value of the high pressure (HP) supplied by the second measurement device.

**10.** Air conditioning installation according to claim 1, **characterised in that** the third measurement device is a detector (122) placed in the fins of the evaporator (13) which supplies a measurement of the instantaneous value of the evaporation temperature.

**11.** Air conditioning installation according to claim 1, **characterised in that** the third measurement device is a detector (122) placed in the refrigerant fluid, which supplies a measurement of the instantaneous value of the evaporation temperature.

**12.** Air conditioning installation according to any of claims 10 and 11, **characterised in that** the electronic control device is suitable for calculating the value of the low pressure (LP) on the basis of the instantaneous value of the evaporation temperature supplied by the second measurement device.

13. Air conditioning installation according to claim 1, **characterised in that** the third measurement device is a gauge (22) placed between the evaporator (13) and the compressor (14), which supplies a measurement of the instantaneous value of the low pressure (LP) directly.

14. Air conditioning installation according to claim 1 combined with any of claims 2 to 13, **characterised in that** electronic control device (401) is suitable for calculating an estimation of the refrigerant mass flow rate on the basis of the values measured by the first and second measurement device and two data items relating to the operation of the vehicle, sent by the injection control unit (42).

15. Air conditioning installation according to claim 14, **characterised in that** the data relating to the operation of the vehicle are linked with the speed of the vehicle and the voltage of the engine blowers.

16. Air conditioning installation according to claim 14, **characterised in that** the electronic control device (401) is suitable for calculating the power consumed by the compressor on the basis of the estimation of the mass flow rate calculated, the values measured by the second and third measurement device, and data relating to the operation of the vehicle, supplied by the injection control unit (42).

17. Air conditioning installation according to claim 16, **characterised in that** the data relating to the operation of the vehicle are linked with the rotation speed of the compressor.

18. Air conditioning installation according to claim 1 combined with any of claims 2 to 13, **characterised in that** the electronic control device (401) is suitable for calculating an estimation of the high pressure (HP) of the refrigerant fluid on the basis of the value measured by the first measurement device, the value of the refrigerant mass flow rate and two data items relating to the operation of the vehicle, sent by the injection control unit (42).

19. Air conditioning installation according to claim 18, **characterised in that** the data relating to the operation of the vehicle are linked with the speed of the vehicle and the voltage of the engine blowers.

20. Air conditioning installation according to claim 18, **characterised in** the electronic control device (401) is suitable for calculating to the power consumed by the compressor on the basis of the estimation of the high pressure (HP) calculated, the value measured by the third measurement device, and data relating to the operation of the vehicle, supplied by the injection control unit (42).

21. Air conditioning installation according to claim 20, **characterised in that** the data relating to the operation of the vehicle are linked with the rotation speed of the compressor.

22. Air conditioning installation according to claims 18 to 21, **characterised in that** electronic control device is capable, for a given initial status, of calculating the values of the power consumed by the compressor iteratively, on the basis of the high pressure values corresponding to selected minor variations of the rotation speed in order to estimate the maximum rotation speed.

23. Air conditioning installation according to claim 22, **characterised in that** the values of the high pressure are calculated on the basis of the successive values of the refrigerant mass flow rate, calculated as a function of minor rotation speed variations.

24. Air conditioning installation according to claim 23, **characterised in that** the initial status comprises the values of the high pressure (HP) and the low pressure (LP), measured by the second and third measurement device, corresponding to an initial rotation speed.

**Patentansprüche**

1. Klimaanlage für Motorfahrzeug, das mit einem Einspritzsteuerungsgerät (42) ausgerüstet ist, wobei die Anlage einen geschlossenen Kältemittelkreislauf umfasst, der einen mechanischen oder elektrischen Verdichter (14) umfasst, einen Kondensator (11), ein Druckminderventil (12) und einen Verdampfer (13), wobei der Verflüssiger (11) einen Luftstrom aufnimmt, der durch einen Gebläsemotor (15) strömt sowie eine elektronische Kontrolleinrichtung (401), die zur Wechselwirkung mit dem geschlossenen Kältemittelkreislauf (10) und dem Einspritzsteuerungsgerät (42) bestimmt ist, wobei die besagte Anlage Messvorrichtungen umfasst, die ermöglichen, Folgendes festzulegen:

   - einen ersten Wert in Bezug auf die Temperatur des externen Luftstroms am Eingang des Verflüssigers ($T_{aek}$),
   - einen zweiten Wert in Bezug auf den Druck am Ausgang des Verdichters, den so genannten Hochdruck (HP),
   - einen dritten Wert in Bezug auf den Druck am Eingang des Verdichters, den so genannten Niederdruck (BP),

**dadurch gekennzeichnet, dass** die elektronische Kontrolleinrichtung (401) die Auflösung einer linearen Gleichung einsetzt, die den Massendurchsatz des Kältemittels (m) mit den Werten verbindet, die von der ersten und zweiten Messvorrichtung gemessen werden, um eine Abschätzung des Durchsatzes zu berechnen, wenn es sich bei dem Verdichter um einen mechanischen Verdichter handelt, oder des Hochdrucks (HP) des Kältemittels, wenn es sich bei dem Verdichter um einen elektrischen Verdichter handelt und zur Abschätzung, ausgehend von diesem Durchsatz oder diesem Hochdruck (HP), von den durch die besagten Messvorrichtungen bereitgestellten Messungen und von den durch das Einspritzsteuerungsgerät übertragenen Informationen, zu denen der Wert der Antriebsgeschwindigkeit ($V_a$) des Fahrzeugs und die Spannung des Gebläsemotors (15) zählen, der von dem Verdichter aufgenommenen Leistung (14).

2. Klimaanlage gemäß Anspruch 1, **dadurch gekennzeichnet, dass** die erste Messvorrichtung eine Sonde (24) ist, die zwischen dem Gebläsemotor (15) und dem Verflüssiger (11) positioniert ist und eine Messung des Wertes der Temperatur des externen Luftstroms am Eingang des Verflüssigers ($T_{aek}$) liefert.

3. Klimaanlage gemäß Anspruch 2, **dadurch gekennzeichnet, dass** die erste Messvorrichtung eine Sonde ist, die mit dem Einspritzsteuerungsgerät (42) verbunden ist, das eine Messung des Wertes der Temperatur des externen Luftflusses (Text) liefert.

4. Klimaanlage gemäß Anspruch 3, **dadurch gekennzeichnet, dass** die elektronische Kontrolleinrichtung (401) geeignet ist, eine Abschätzung des Wertes der Temperatur des externen Luftflusses am Eingang des Kondensators ($T_{aek}$) zu berechnen, anhand des Wertes der Außenlufttemperatur (Text) und des Wertes der Antriebsgeschwindigkeit ($V_a$) des Fahrzeugs, die von dem Einspritzsteuerungsgerät (42) geliefert werden.

5. Klimaanlage gemäß Anspruch 1, **dadurch gekennzeichnet, dass** die zweite Messvorrichtung eine Sonde (23) ist, die am Eingang des Verflüssigers (11) positioniert ist, direkt in dem Kältemittel und die eine Messung des Wertes der Kondensationstemperatur ($T_k$) liefert.

6. Klimaanlage gemäß Anspruch 5, **dadurch gekennzeichnet, dass** die elektronische Kontrolleinrichtung (401) anhand des Wertes der Kondensationstemperatur ($T_k$), der von der zweiten Messvorrichtung geliefert wird, zur Berechnung des Wertes des Hochdrucks (HP) geeignet ist.

7. Klimaanlage gemäß Anspruch 1, **dadurch gekennzeichnet, dass** die zweite Messvorrichtung ein Fühler (123) ist, der zwischen dem Ausgang des Verdichters (14) und dem Eingang des Verflüssiger (11) positioniert ist und zur direkten Messung des Momentanwertes des Hochdrucks (HP) bestimmt ist.

8. Klimaanlage gemäß Anspruch 1, **dadurch gekennzeichnet, dass** die zweite Messvorrichtung ein Fühler (123) ist, der zwischen dem Ausgang des Verflüssigers (11) und dem Eingang des Druckminderventils (12) positioniert ist, und zur direkten Messung des Momentanwertes des Hochdrucks (HP) bestimmt ist.

9. Klimaanlage gemäß einem der Ansprüche 7 und 8, **dadurch gekennzeichnet, dass** die elektronische Kontrolleinrichtung (401) anhand des Momentanwertes des Hochdrucks (HP), der von der zweiten Messvorrichtung geliefert wird, zur Berechnung des Wertes der Kondensationstemperatur ($T_k$) geeignet ist.

10. Klimaanlage gemäß Anspruch 1, **dadurch gekennzeichnet, dass** die dritte Messvorrichtung eine Sonde (122) ist, die in den Flügeln des Verdampfers (13) positioniert ist, und die eine Messung des Momentanwertes der Verdampfungstemperatur liefert.

11. Klimaanlage gemäß Anspruch 1, **dadurch gekennzeichnet, dass** die dritte Messvorrichtung eine Sonde (122) ist, die im Kühler positioniert ist und eine Messung des Momentanwertes der Verdampfungstemperatur liefert.

12. Klimaanlage gemäß einem der Ansprüche 10 und 11, **dadurch gekennzeichnet, dass** die elektronische Kontrolleinrichtung anhand des Momentanwertes der Verdampfungstemperatur, die von der zweiten Messvorrichtung geliefert wird, zur Berechnung des Wertes des Niederdrucks (BP) geeignet ist.

13. Klimaanlage gemäß Anspruch 1, **dadurch gekennzeichnet, dass** die dritte Messvorrichtung ein Fühler (22) ist, der zwischen dem Verdampfer (13) und dem Verdichter (14) positioniert ist und eine direkte Messung des Momentanwertes des Niederdrucks (BP) liefert.

14. Klimaanlage gemäß Anspruch 1, kombiniert mit einem der Ansprüche 2 bis 13, **dadurch gekennzeichnet, dass** die elektronische Kontrolleinrichtung (401) geeignet ist, die Abschätzung des Durchsatzes des Kältemittels zu berechnen, anhand der Werte, die von der ersten und der zweiten Messvorrichtung gemessen wurden und anhand von zwei Informationen in Bezug auf die Funktionsweise des Fahrzeugs, die von dem Einspritzsteuerungsgerät (42) übertragen werden.

**15.** Klimaanlage gemäß Anspruch 14, **dadurch gekennzeichnet, dass** die Informationen in Bezug auf die Funktionsweise des Fahrzeugs mit der Antriebsgeschwindigkeit des Fahrzeugs und mit der Spannung des Gebläsemotors verbunden sind.

**16.** Klimaanlage gemäß Anspruch 14, **dadurch gekennzeichnet, dass** die elektronische Kontrolleinrichtung (401) für die Berechung der von dem Verdichter aufgenommenen Leistung geeignet ist, anhand der berechneten Abschätzung des Durchsatzes, der von der zweiten und dritten Messvorrichtung gemessenen Werte und der Informationen in Bezug auf die Funktionsweise des Fahrzeugs, die von dem Einspritzsteuerungsgerät (42) geliefert werden.

**17.** Klimaanlage gemäß Anspruch 16, **dadurch gekennzeichnet, dass** die Informationen in Bezug auf die Funktionsweise des Fahrzeugs mit der Rotationsgeschwindigkeit des Verdichters verbunden sind.

**18.** Klimaanlage gemäß Anspruch 1, kombiniert mit einem der Ansprüche 2 bis 13, **dadurch gekennzeichnet, dass** die elektronische Kontrolleinrichtung (401) geeignet ist, eine Abschätzung des Hochdrucks (HP) des Kältemittels zu berechnen, anhand des von der ersten Messvorrichtung gemessenen Wertes, des Wertes des Durchsatzes des Kältemittels und anhand von zwei Informationen in Bezug auf die Funktionsweise des Fahrzeugs, die von dem Einspritzsteuerungsgerät (42) übertragen werden.

**19.** Klimaanlage gemäß Anspruch 18, **dadurch gekennzeichnet, dass** die Informationen in Bezug auf die Funktionsweise des Fahrzeugs mit der Antriebsgeschwindigkeit des Fahrzeugs und der Spannung des Gebläsemotors verbunden sind.

**20.** Klimaanlage gemäß Anspruch 18, **dadurch gekennzeichnet, dass** die elektronische Kontrolleinrichtung (401) geeignet ist, die vom Verdichter aufgenommene Leistung zu berechnen, anhand der Abschätzung des gemessenen Hochdrucks (HP), des von der dritten Messvorrichtung gemessenen Wertes und anhand von Informationen in Bezug auf die Funktionsweise des Fahrzeugs, die von dem Einspritzsteuerungsgerät (42) geliefert werden.

**21.** Klimaanlage gemäß Anspruch 20, **dadurch gekennzeichnet, dass** die Informationen in Bezug auf die Funktionsweise des Fahrzeugs mit der Rotationsgeschwindigkeit des Verdichters verbunden sind.

**22.** Klimaanlage gemäß den Ansprüchen 18 bis 21, **dadurch gekennzeichnet, dass** die elektronische Kontrolleinrichtung geeignet ist, für einen vorgegebenen Ausgangszustand wiederholend Werte der von dem Verdichter aufgenommenen Leistung zu berechnen, anhand von Werten des Hochdrucks, die ausgewählten kleinen Schwankungen der Rotationsgeschwindigkeit entsprechen, um die maximale Rotationsgeschwindigkeit abzuschätzen.

**23.** Klimaanlage gemäß Anspruch 22, **dadurch gekennzeichnet, dass** die Werte des Hochdrucks anhand der aufeinander folgenden Werte des Durchsatzes des Kältemittels berechnet werden, die entsprechend kleiner Schwankungen der Rotationsgeschwindigkeit berechnet wurden.

**24.** Klimaanlage gemäß Anspruch 23, **dadurch gekennzeichnet, dass** der Ausgangszustand die Werte des Hochdrucks (HP) und des Niederdrucks (BP) umfasst, die von der zweiten und der dritten Messvorrichtung gemessen wurden, entsprechend einer Anfangsrotationsgeschwindigkeit.

FIG.1

REGULATEUR
D'HABITACLE ⌐41

402 35 ⌐34 401 40

REGULATEUR
DE
CLIMATISATION

CARTE
ELECTRONIQUE

32

33

CALCULATEUR
D'INJECTION DU
MOTEUR ⌐42

31 ⌐30

MOTEUR

⌐43

22 ⌐14
23 24 15
16
20
11
21 19
13
18 17
⌐12 ⌐10

FIG.2

FIG.3

**FIG.4**

FIG.5

FIG.6

**140**

Moteur
Electrique

**14**

Source
Eléctrique

Convertisseur
de
Fréquence

**142**

**141**

FIG.7

Définir l'état
initial $\quad$ 100

$j=0$

Modifier N
$\underline{Ni} = Nj\text{-}1 + dNj$ $\quad$ 102

$Nj, dNj$

Calculer le débit
massique mj à
l'état j $\quad$ 104

$mj$

Calculer la
haute pression HPj
à l'état j $\quad$ 106

$j = j + 1$ $\quad$ 114

$HPj, BP_0$

Calculer la puissance
électrique Pelj à
l'état j $\quad$ 108

$Welj$

Vérifier
si
Pelj > Pel MAX $\quad$ 110

N $\qquad$ Calculer $\alpha j$ $\quad$ 112

O

FIG.8